(19) Europäisches Patentamt / European Patent Office / Office européen des brevets

(11) **EP 1 434 976 B1**

(12) **EUROPÄISCHE PATENTSCHRIFT**

(45) Veröffentlichungstag und Bekanntmachung des Hinweises auf die Patenterteilung:
**09.01.2008 Patentblatt 2008/02**

(51) Int Cl.:
*G01J 3/443* *(2006.01)*     *G01J 3/28* *(2006.01)*
*G01J 1/42* *(2006.01)*

(21) Anmeldenummer: **02772361.8**

(22) Anmeldetag: **04.10.2002**

(86) Internationale Anmeldenummer:
**PCT/EP2002/011153**

(87) Internationale Veröffentlichungsnummer:
**WO 2003/034006 (24.04.2003 Gazette 2003/17)**

(54) **KAMERAKOPF ZUR SCHNELLEN AUFZEICHNUNG VON SPEKTREN EINES VUV SPEKTROMETERS**

CAMERA HEAD FOR FAST REPRODUCTION OF A VACUUM UV SPECTROMETER SPECTRUM

TETE DE CAMERA POUR REPRODUCTION RAPIDE DE SPECTRE D'UN SPECTROMETRE VUV

(84) Benannte Vertragsstaaten:
**AT BE BG CH CY CZ DE DK EE ES FI FR GB GR IE IT LI LU MC NL PT SE SK TR**

(30) Priorität: **10.10.2001 DE 10150071**

(43) Veröffentlichungstag der Anmeldung:
**07.07.2004 Patentblatt 2004/28**

(73) Patentinhaber: **Forschungszentrum Jülich GmbH 52425 Jülich (DE)**

(72) Erfinder:
- **BIEL, Wolfgang 52428 Jülich (DE)**
- **SCHOLL, Alfred 52223 Stolberg (DE)**
- **SANDRI, Norbert 52428 Jülich (DE)**
- **TELEMANN, Gerd 52382 Niederzier (DE)**
- **BRINKMANN, Dietmar 52459 Inden-Frenz (DE)**

(74) Vertreter: **Gille Hrabal Struck Neidlein Prop Roos Patentanwälte Brucknerstrasse 20 40593 Düsseldorf (DE)**

(56) Entgegenhaltungen:
**US-A- 3 447 249**

- **FONCK ET AL.: "Multichannel grazing-incidence spectrometer for plasma impurity diagnosis: SPRED" APPLIED OPTICS, Bd. 21, Nr. 12, 15. Juni 1982 (1982-06-15), Seite 21115ff XP002229905 Washington, USA in der Anmeldung erwähnt**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Vorrichtung zum Messen der Transportzeit von Verunreinigungsteilchen in einem Plasma, welche ein Spektrometer und weitere Mittel und Einrichtungen gemäß dem Oberbegriff des Anspruches 1 aufweist. Das erfindungsgemäß vorgesehene Spektrometer weist einen Eingangsspalt auf, durch den von den Verunreinigungsteilchen ausgesendete Spektrallinien auf ein Beugungsgitter fallen. Wellenlängenabhängig werden die Spektrallinien unter verschiedenen Winkeln reflektiert. Die aus dem Spektrometer austretenden zerlegten Lichtsignale werden von einer ortsauflösenden Zeilen-Kamera erfasst. Aus der so erhaltenen Messinformation wird die Transportzeit berechnet.

Das Spektrometer befindet sich während des Betriebes in einer Vakuumatmosphäre.

Zur experimentellen Untersuchung des radialen Transports von Plasmaverunreinigungen in Fusionsplasmen wird u. a. eine kleine Menge einer Plasmaverunreinigung am Plasmarand in das Plasma eingebracht und dann die Zeitentwicklung von Spektrallinien verschiedener Ionisationsstufen gemessen. Bei solchen Experimenten, zum Beispiel beschrieben in "New diagnostics for physics studies on TEXTOR-94, Review of Scientific Instruments, Vol. 72, Seiten 1046 bis 1053, dringen die das Plasma verunreinigenden Teilchen - hier Verunreinigungsteilchen genannt - vom Plasmarand ausgehend in Richtung zum Plasmazentrum in Bereiche zunehmend höherer Elektronentemperatur vor und werden dabei schrittweise zu immer höheren Ionisationsstufen durchionisiert. Die Verunreinigungsteilchen liegen dann in Form von Ionen vor. Gleichzeitig werden diese ionisierten Verunreinigungsteilchen - hier Verunreinigungsionen genannt - durch Elektronenstoß zur Emission charakteristischer Spektrallinien angeregt. Beim Experiment treten die Spektrallinien höherer Ionisationsstufen gegenüber den niedrigen Ionisationsstufen zeitlich verzögert auf. Diese Zeitverzögerung zwischen dem Auftreten zweier Spektrallinien verschiedener Ionisationsstufen $Z_1$ und $Z_2$ ist ein direktes Maß für die Transportzeit, welche die Verunreinigungsteilchen für den radialen Transport zwischen denjenigen radialen Positionen $r_1$ und $r_2$ benötigen, an denen die Emissivitäten der betrachteten Spektrallinien lokalisiert sind. Die Genauigkeit der beschriebenen Methode hängt davon ab, dass möglichst viele verschiedene Spektrallinien verschiedener Ionisationsstufen gleichzeitig mit gutem Signal/Rauschverhältnis und ausreichender Zeitauflösung beobachtet werden können.

Aus Vorversuchen ergab sich für typische Bedingungen bei einem Fusionsexperiment, dass regelmäßig eine Zeitauflösung von 1 ms erforderlich ist, um die Zeitverzogerungen zwischen Spektrallinien verschiedener Ionisationsstufen messtechnisch ausreichend auflösen zu können. Die Messung sollte kontinuierlich über die gesamte Entladungsdauer eines typischen Plasmas (6 bis 10 Sekunden) erfolgen können, um alle physikalisch interessanten Vorgänge während der Entladung erfassen zu können.

Die Unterscheidung zwischen Spektrallinien und Untergrund sowie die Trennung verschiedener Spektrallinien ist regelmäßig nur bei Verwendung von Spektrometern mit ausreichender Wellenlängenauflösung zu erreichen. Die Anwendbarkeit dieser Methode auf möglichst viele verschiedene relevante Plasmaverunreinigungen legt schließlich den zu beobachtenden Wellenlängenbereich im VUV (Vakuum-Ultraviolett, ca. 10 nm bis 100 nm) fest, da dort die für Fusionsexperimente relevanten Verunreinigungen zahlreiche ihrer stärksten Spektrallinien aufweisen.

Die Anforderungen an die Messtechnik, und zwar insbesondere an das eingesetzte Spektrometer für die geplanten Untersuchungen, lassen sich also wie folgt zusammenfassen:

a) Ein breiter Wellenlängenbereich im VUV (10 bis 100 nm) sollte vom Spektrometer verarbeitet werden können.

b) Das Spektrometer sollte mit einer hohen Zeitauflösung messen können, und zwar insbesondere mindestens 1000 vollständige Spektren pro Sekunde.

c) Die Effizienz des Spektrometers sollte hoch sein, da das Signal/Rauschverhältnis auch von der Photonenstatistik abhängt.

d) Das Spektrometer sollte über eine: ausreichende Wellenlängenauflösung (Linientrennung) verfügen.

e) Das Spektrometer sollte einen großen Dynamikbereich aufweisen, da die Intensitäten der verschiedenen Spektrallinien sehr unterschiedlich sind.

Als nächstliegender Stand der Technik, der die genannten Anforderungen derzeit am besten zu erfüllen vermag, wurde das Spektrometerkonzept "SPRED" (Survey Poor Resolution Extended Domain) aufgefunden, das in Arbeiten von Fonck et al., Appl. Optics, Vol. 21, Seite 2115ff (1982), sowie Stratton et al., Reviews of Scientific Instruments, Vol. 57, Seite 2043ff (1986), dargestellt ist.

Das Spektrometerkonzept kann wie folgt kurz zusammengefasst werden: Herzstück des Spektrometers ist ein Beugungsgitter von Jobin-Yvon mit folgenden Eigenschaften:

I. Streifender Lichteinfall unter etwa 70 Grad zur Gitternormalen, um so eine ausreichende Reflektivität der Gitterbeschichtung im Bereich unterhalb von 50 nm zu erzielen.

II. Toroidales Gittersubstrat zur Reduktion der geometrischen Lichtverluste durch Astigmatismus. Die Effizienz wird hierdurch erhöht.

III. Die Gitterstriche werden durch Ionenätzen oder holografisch hergestellt. Dadurch wird eine hohe Effizienz in der ersten Beugungsordnung bei weitgehender Unterdrückung der höheren Beugungsordnungen erreicht. Ferner wird eine Reduktion der Abbildungsfehler bewirkt sowie ein scharfes Spektrum in einer Ebene der Breite 40 mm erzielt.

IV. Die Gitteroberfläche wird zur Erhöhung der Effizienz im Wellenlängenbereich unterhalb 30 nm mit Gold beschichtet.

V. Die beiden Armlängen des Spektrometers (hierunter ist der Abstand Eintrittsspalt-Gitter bzw. Gitter-Detektor zu verstehen) sind mit jeweils etwa 30 cm so gewählt, dass sich für die herstellbaren Gittergrößen und Strichdichten ein Instrument mit großem Wellenlängenbereich bei ausreichender Wellenlängenauflösung und großer Öffnung (f/30) und somit hoher Effizienz ergibt.

Das Beugungsgitter erzeugt in der Ausgangsebene des Spektrometers Bilder des Eintrittsspalts in einem Abbildungsmaßstab von etwa 1:1.

Zur Konversion der VUV-Photonen in sichtbares Licht bei gleichzeitiger Verstärkung der Signale wird in der Ausgangsebene des Spektrometers ein offener MCP-Detektor ("Multi-Channel-Plate") verwendet. Das gesamte Spektrometer wird im Vakuum betrieben, da die Strahlung in dem Wellenlängenbereich 10 bis 100 nm von allen Gasen bzw. allen Materialien absorbiert wird. Der Betrieb der offenen MCP-Detektoren erfordert zudem einen Druck unterhalb von 10⁻⁶ mbar, sodass für das Spektrometer insgesamt ein UHV- Aufbau notwendig ist (UHV: Ultrahochvakuum).

Die gemäß a) bis e) gewünschten technischen Anforderungen machen es erforderlich, die aus dem vorgenannten Stand der Technik bekannten Vorrichtungen in einigen Punkten gezielt zu verbessern.

Aufgabe der Erfindung ist die Schaffung einer Vorrichtung der eingangs genannten Art, mit der schneller und genauer als bisher der Transport von Verunreinigungen in einem Plasma meßtechnisch erfaßt werden kann.

Die Aufgabe wird durch eine Vorrichtung mit den Merkmalen des Hauptanspruchs gelöst. Vorteilhafte Ausgestaltungen ergeben sich aus den Unteransprüchen.

Die erfindungsgemäße Vorrichtung umfasst ein Spektrometer, Mittel zur ortsauflösende Umwandlung von aus dem Spektrometer austretendem Licht in Ladung, eine Integratorschaltung zur ortsauflösenden Integrierung der Ladung, sowie Mittel zur Darstellung der ortsabhängig integrierten Ladung. Die Integratorschaltung ist aus diskreten Bauelementen aufgebaut.

Die Erfinder haben erkannt, dass zur Lösung der gestellten Aufgabe die Integratorschaltung im Vergleich zum Stand der Technik abzuändern ist. Insbesondere haben die Erfinder erkannt, dass der bisherige Weg, nämlich integrierte Schaltkreise einzusetzen, verlassen werden muss und die Aufgabe nur gelöst werden kann, indem die Integratorschaltung aus diskreten Bauelementen aufgebaut wird. Diskrete Bauelemente, die zur Realisierung geeignet sind, gehen aus dem Ausführungsbeispiel hervor.

Ein großer Dynamikbereich bei hoher Zeitauflösung führt (wegen der vorgegebenen Werte für Rauschlevel und "full-well-capacity" des nachzuschaltenden Kamerakopfes) zu hohen Gesamtintensitäten der ausgangsseitigen, verstärkten Spektren, für die dann beispielsweise ein offener MCP-Detektor entsprechend auszulegen ist. Mit einer einstufigen Standard-MCP (einem Längen/Durchmesser-Verhältnis der Einzelkanäle von 40:1) wird nur eine Stromverstärkung von maximal etwa 3000 erreicht. Eine solche Verstärkung ist regelmäßig unzureichend. Eine mehrstufige Standard-MCP führt regelmäßig zu einer zu starken räumlichen Verbreiterung (Verschlechterung der Ortsauflösung und damit der Wellenlängenauflösung des Gesamtsystems). Daher wird die MCP als EDR-MCP ("Extended dynamic range", d.h. ein um einen Faktor 10 erweiterter Dynamikbereich) mit einem Längen/Durchmesser-Verhältnis der Einzelkanäle von insbesondere 60: 1 (d.h. Faktor 30 höhere Gesamtverstärkung) ausgelegt. Wesentlich ist bei dieser Ausgestaltung, daß das Längen/Durchmesser-Verhältnis der Einzelkanäle derart eingestellt wird, dass die Gesamtverstärkung wesentlich größer im Vergleich zur genannten unzureichenden Verstärkung ist.

Zur Erhöhung der Effizienz (Quantenausbeute) wird die MCP-Oberfläche bevorzugt mit CsJ beschichtet.

Für den nachgeschalteten Phosphor-Screen zur Konversion des Elektronenpulses in sichtbares Licht wird insbesondere ein spezieller sehr schneller Phosphor (Typ P46) gewählt, dessen Nachleuchtdauer/ Abklingzeit (einige 10 μs) deutlich unterhalb der angestrebten Zeitauflösung des Gesamtsystems liegt und der zusätzlich eine hohe Lichtausbeute in dem Wellenlängenbereich aufweist, in welchem der nachgeschaltete Kamerakopf seine höchste Effizienz aufweist (ca. 500-700 nm). Mit dieser Auslegung kann insgesamt eine hohe Verstärkung der MCP von bis zu 10⁵ bei hoher Effizienz, hoher Zeitauflösung und akzeptabler Ortsauflösung (minimale Fleckgröße am Ausgang beträgt ca. 60 μm) erreicht.

Der Durchmesser von MCP und Screen ist in einer Ausgestaltung der Erfindung mit 40 mm (das ist der größte erhältliche Standarddurchmesser) so gewählt, dass das gesamte Spektrum darauf abgebildet wird. Die Spektrallinien erscheinen auf der Oberfläche des Phosphor-Screens als dünne Striche, die mit bloßem Auge erkennbar sind (Bilder des Eintrittsspaltes).

Die Ortsauflösung der MCP legt nun im wesentlichen auch die optimale Breite für den Eintrittsspalt fest, bis zu der die einfallende Lichtmenge (und damit die Effizienz des Gesamtsystems) gesteigert werden kann, ohne dass eine merkliche zusätzliche Verschlechterung der Wellenlängenauflösung eintritt. Bevorzugt wird daher eine Breite von 50 μm gewählt.

Wird eine weitere Steigerung der einfallenden Lichtmenge ohne Verlust an Auflösung gewünscht, so wird erfindungsgemäß die Spalthöhe vergrößert. Dies erfordert (wegen der 1:1 Abbildung im Spektrometer) einen Kamerakopf zur Aufzeichnung der Spektren, dessen Sensor eine möglichst große Höhe aufweist.

Auslegungsdaten zu Geometrie und Ankopplung des Kamerakopfes.

Für die Aufzeichnung der Spektren in der Ausgangsebene des MCP-Detektors (Phosphor-Screen) wird ein Kamerakopf/Detektor bevorzugt, der das gesamte Spektrum erfasst (große Sensorbreite) und möglichst viel Licht einsammelt (große Sensorhöhe, senkrecht zur Dispersionsrichtung des Spektrometers). Kommerziell erhältliche Komplettsysteme mit den geforderten Werten von Abmessungen und Zeitauflösung sind nicht erhältlich. Insbesondere gibt es keine standardmäßig erhältlichen zweidimensionalen Detektoren (z.B. CCDs) mit den geforderten Abmessungen, welche eine Gesamtauslesung mit einer Bildrate von 1000/s kontinuierlich ermöglichen. Es gibt jedoch einen eindimensionalen Sensor (N-MOS Sensor HAMAMATSU Typ S3904-1024F mit fiberoptischen Eingangsfenster und mit Versorgungsplatine Typ C4069) mit einer Breite von 25 mm (1024 Pixel zu je 25 μm Breite) und Höhe von 2.5 mm sowie einer spezifizierten Pixelrate von bis zu 2 MHz.

Zwischen dem (Phosphor-)Screen (Breite z.B. 40 mm) und dem Sensor wird in einer Ausführungsform bevorzugt ein fiberoptischer_Querschnittswandler (mit einem Verhältnis von zum Beispiel 40/25) eingebaut, der das Bild (Spektrum) im Beispielsfall verkleinert. Es gelingt so eine Anpassung an die geometrischen Abmessungen des Sensors. Diese fiberoptische Abbildung ist im Vergleich zu einer Abbildung mittels Linsen wesentlich lichtstärker und daher für diese Anwendung vorzuziehen.

Da die erlaubte Ausgangsintensität des offenen MCP-Detektors bei Aussteuerung bis an dessen Linearitätsgrenze regelmäßig nicht ausreicht, um den Sensor S3904 (full capacity 25 pC) hinreichend auszusteuern, wird zwischen fiberoptischem Querschnittswandler und Sensor ein Bildverstärker erster Generation ("Diode") mit fiberoptischen Ankopplung in einer weiteren Ausgestaltung zwischengeschaltet, der ohne wesentliche Einbußen in der Ortsauflösung eine zusätzliche lineare Lichtverstärkung um einen Faktor 10-15 zu bewirken vermag. Nachfolgend wird ein Ausführungsbeispiel des Kamerakopfes beschrieben.

Der Betrieb des eingesetzten Zeilenarrays S3904-F mit der zugehörigen Platine C4069 von Hamamatsu erfordert zwei Sorten von Triggersignalen, welche von außen zugeführt werden müssen: Am Eingang "master start" muss ein Triggerpuls zum Start eines Spektrums angelegt werden. Am Eingang "master clock" müssen 6 Triggerpulse pro Pixel anliegen, um die auf einem Pixeln aufgesammelte Ladung "herauszuschieben". Eine Messung von 1000 Spektren pro Sekunde erfordert also eine neben dem Triggersignal für die Spektrenrate (1 kHz) zusätzlich ein Triggersignal mit dem 6fachen der Pixelrate, was bei 1024 Pixel sowie 1000 Spektren pro Sekunde eine Triggerfrequenz von knapp oberhalb von 6 MHz ergibt. Für diese Aufgabe wurde ein kommerziell erhältlicher Standard-Quarz (6.55 MHz) ausgewählt. Der unter oben zuvor beschriebene Aufbau erlaubt es bereits, bei Anlegen solcher geeigneter Triggerpulse an die Platine C4069 primitive Spektren z.B. an einem Oszilloskop zu beobachten (Signalausgang "data video" bzw. "video out"). Allerdings ist die Signalform von "video out" durch eine Kette von zeitlich kurzen, im folgenden so bezeichneten "Nadelpulsen" (zeitliche Halbwertsbreite ca. 100 ns), gegeben, die messtechnisch nur schwierig erfasst werden können. Das eigentlich zu messende physikalische Rohsignal ist die auf einem Pixel des Zeilenarrays seit der letzten Messung (voriges Spektrum) aufgesammelte Ladungsmenge. Diese Ladungsmenge ist zu der Fläche unter den Nadelpulsen am Signalausgang "video out" proportional. Die messtechnisch korrekte Erfassung dieser Signale setzt somit voraus, die Nadelpulse zeitlich zu integrieren, um ein zu deren Fläche proportionales Signal zu gewinnen. Nach der Messung des integrierten Signals muss dieses dann gelöscht werden, um die Schaltung vor dem nächsten zu messenden Nadelpuls zurückzusetzen (geschalteter Integrator). Da die Nadelpulse kurz sind und das Analogsignal zwischen zwei Nadelpulsen der Spannung Null entspricht, kann auf einen weiteren Analog-Schalter vor dem Eingang des Integrators verzichtet werden.

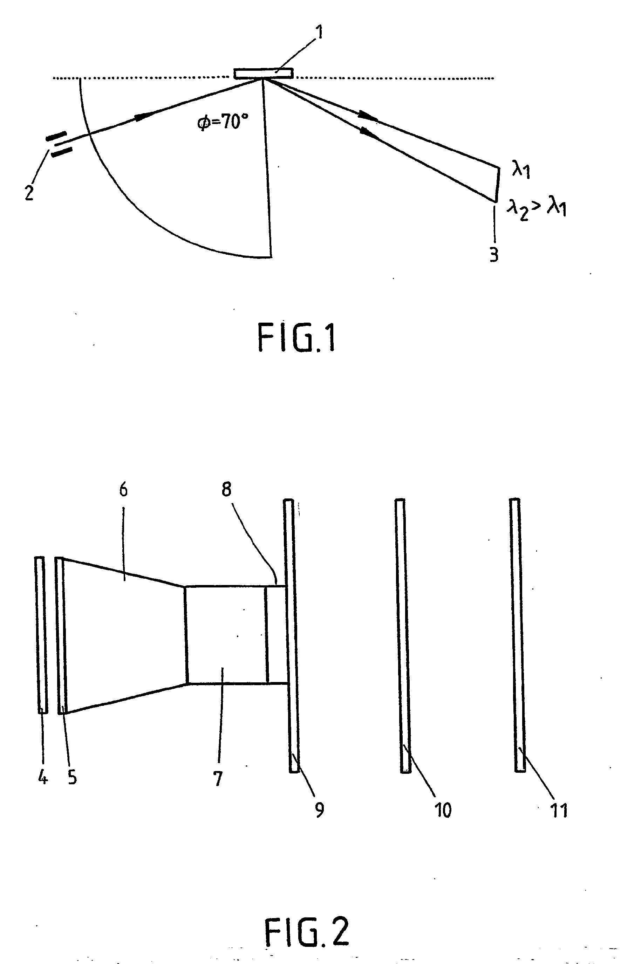

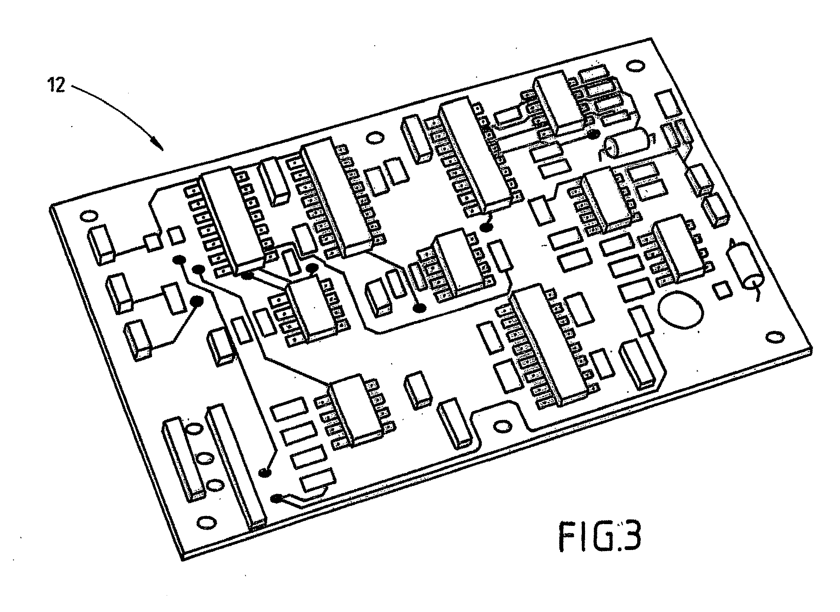

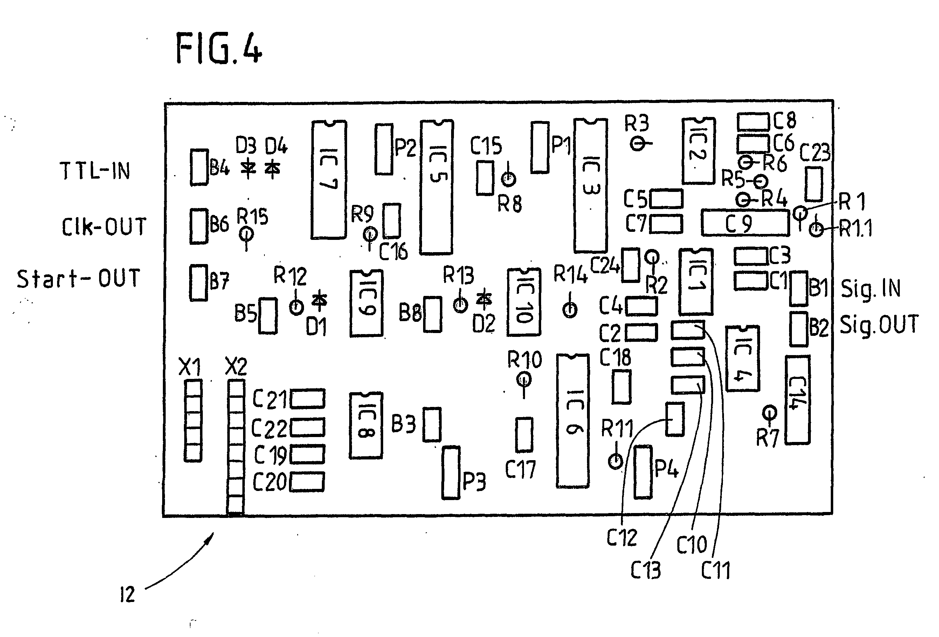

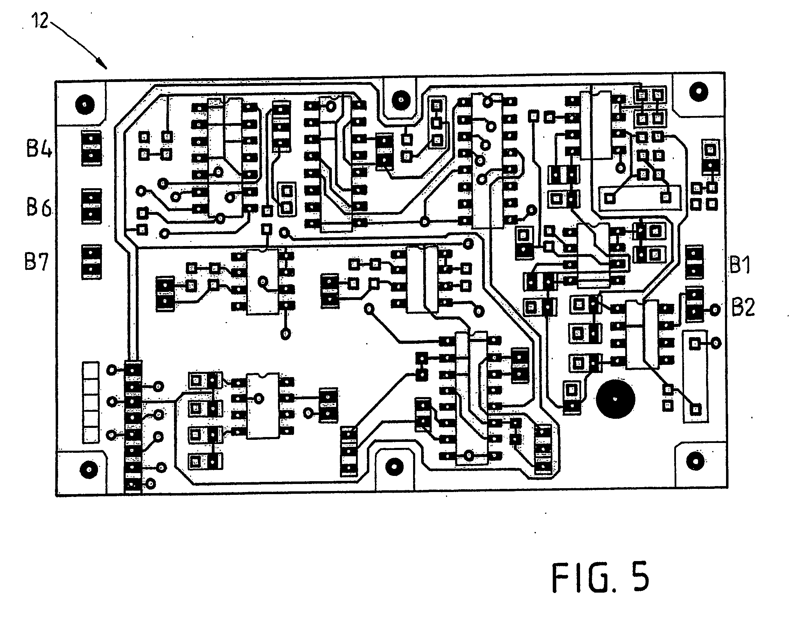

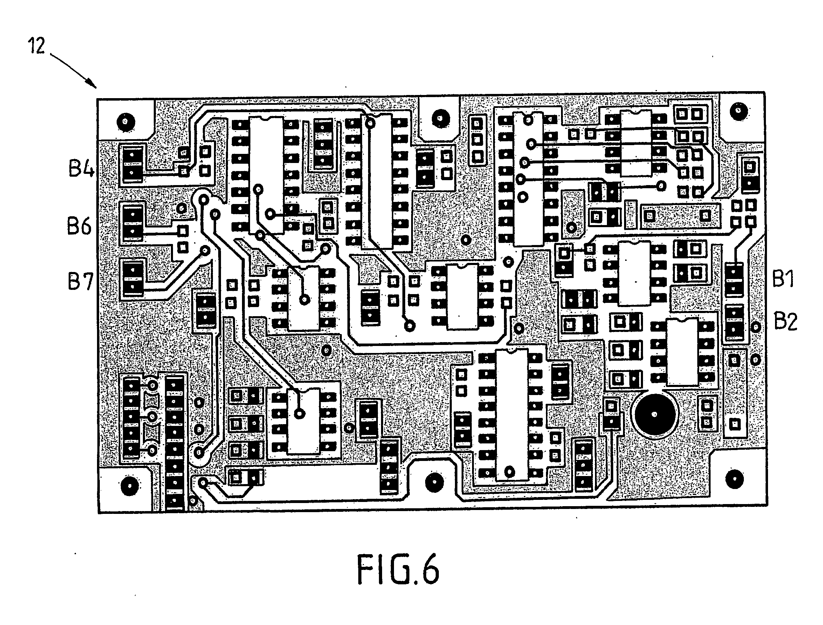

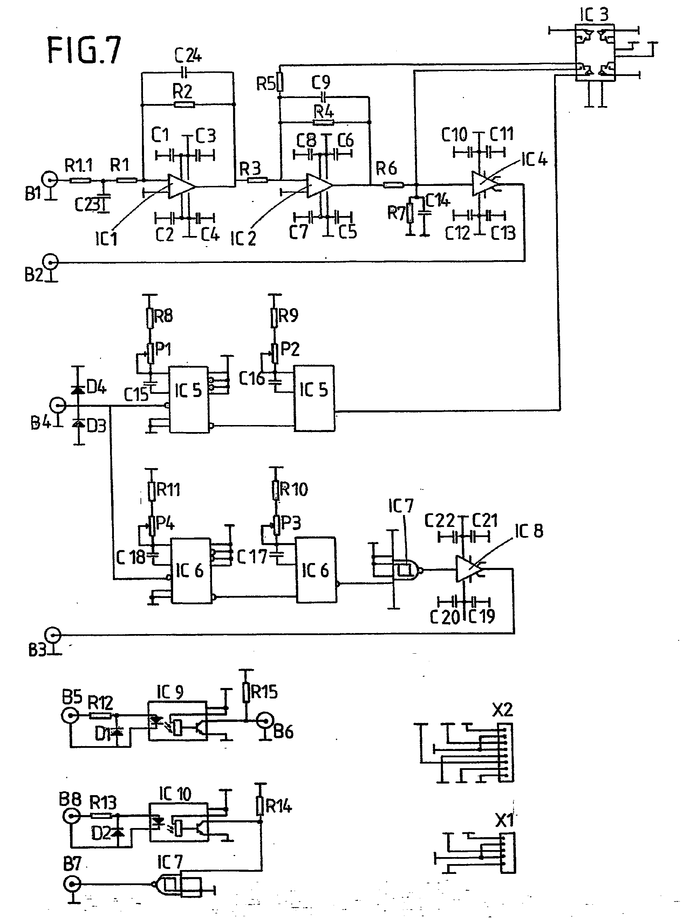

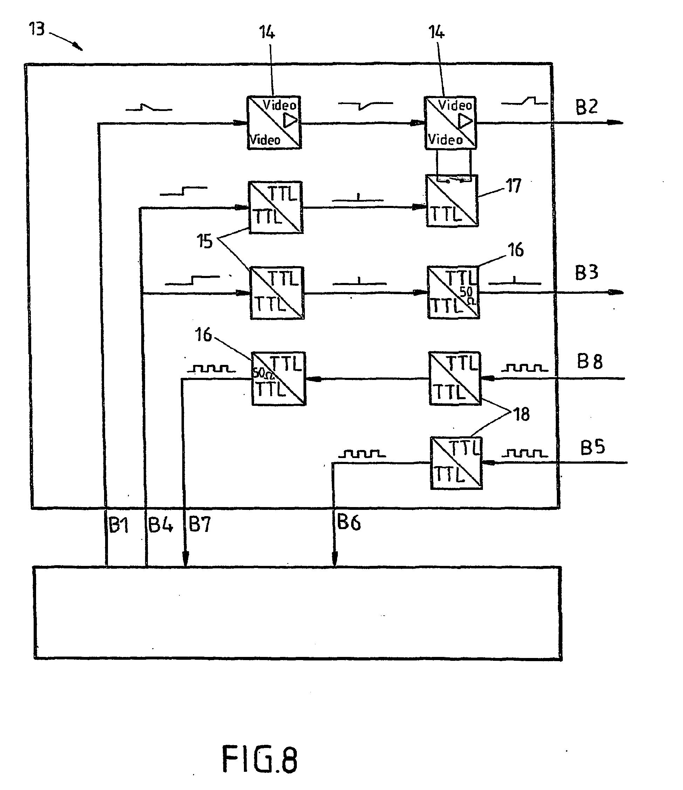

Figuren 1 und 2 verdeutlichen den grundsätzlichen Aufbau. Die nachfolgenden Figuren verdeutlichen die Elektronik.

Nachfolgend wird ein Beispiel für ein Analogteil der Integratorschaltung näher beschrieben.

Kommerziell erhältlich sind ICs mit geschalteten Integratoren (z.B. Burr-Brown IVC 102), die bei einer Zeitkonstante ("Settling time") von 6 μs maximal die Integration von $10^5$ Pulsen pro Sekunde erlauben, das ist für die erfindungsgemäße Anwendung eine Größenordnung zu langsam. Daher wird erfindungsgemäß für diese Aufgabe eine Schaltung aus diskreten Bauteilen bereitgestellt, die aus den Figuren zu entnehmen ist.

Herzstück ist ein geschalteter (invertierender) Integrator, der aus dem schnellen Operationsverstärker IC2 (Burr-Brown OPA655, 400 MHz), einem Widerstand R3 (300) und einem Kondensator C9 (162 pF) besteht, wobei dem Kondensator C9 zur Löschung ein schneller Schalter IC3 (Siliconix DG 612) parallel geschaltet ist. Dem Integrator ist zur Pegelanpassung, Impedanzwandlung und Invertierung der analogen Eingangssignale (das sind die Nadelpulse aus der Platine C4069, angeschlossen an Buchse BI) ein invertierender_Verstärker IC1 (ebenfalls OPA 655) vorgeschaltet. Bei offenem Schalter integriert der Integrator die anliegende Eingangsspannung gemäß

$$U_{aus} = -(1/RC) \int U_{ein}dt + U_0.$$

Die Wahl von R3 und C9 führt zu einer Zeitkonstante RC » 50 ns, die etwas kleiner als die Halbwertsbreite der Nadelpulse gewählt ist, um bereits kurze Zeit nach dem Peak des Nadelpulses ein praktisch zeitlich konstantes Ausgangssignal vorliegen zu haben. Sie darf jedoch nicht zu klein gewählt werden, um ein Übersteuern des Operationsverstärkers im Integrator zu vermeiden.

Die Löschung der integrierten Spannung (Rücksetzung des Kondensators auf den Anfangswert $U_0 = 0$) erfolgt durch Schließen des Schalters IC3. Im Stromkreis zwischen Kondensator und Schalter liegen die Widerstände R5 und R6 (jeweils 44 Ohm), die zusammen mit dem Innenwiderstand des Schalters (45 Ohm) dafür sorgen, dass beim Löschen des Kondensators der erlaubte Maximalstrom im Schalter IC3 ($I_{max}$ = 30 mA) nicht überschritten wird: Für den Integrator-OP gilt $U_{max}$ = 3.5 Volt, mit $R_{gesamt}$ = (2*44+45) Ohm ist $I_{max}$ = 26 mA. Andererseits gilt für die Zeitkonstante des Integratorkreises RC = 21 ns, sodass eine weitgehende Entleerung des Kondensators auf eine Spannung unterhalb 0.1 % des Anfangswertes innerhalb von ca. 160 ns erreicht wird, d.h. der nächste Messwert ist vom Wert seines Vorgängers unabhängig. Das integrierte Mess-Signal wird schließlich über den Leistungstreiber IC4 (Elantec EL 2003) an eine BNC-Ausgangsbuchse (B2) ausgegeben, wobei der Baustein IC4 den Anschluss einer langen (hier 30 m) BNC-Leitung mit 50 Ohm-Abschluss ermöglicht.

Die Triggerelektronik auf der Integratorplatine ist wie folgt aufgebaut.

Auf der Integratorplatine sind Elemente der Triggerelektronik untergebracht, die zum zeitrichtigen Schalten des Integrators (integrieren/löschen) sowie für die Ausgabe eines Triggerpulses für_die anzuschließende Datenerfassung dienen. Von Platine C4069 kommend wird ein Triggersignal (ein Puls pro Pixel) über Buchse B4 eingespeist. Dieses Eingangssignal wird an die ICs 5 und 6 verzweigt. An IC5 (Monoflop 74HC221) wird der Puls zum Schalten des Integrators erzeugt, wobei mit dem Potentiometer P 1 der Startzeitpunkt des Löschpulses (eingestellt: 550 ns nach dem Peak des Nadelpulses) sowie mit Potentiometer P2 die Dauer des Löschpulses (eingestellt: 160 ns) stufenlos eingestellt werden kann. An IC 6 (Timerbaustein 74HC221) wird der Triggerpuls für die anzuschließende Datenerfassung_ erzeugt, wobei mit Potentiometer P3 dessen Startzeitpunkt (eingestellt: 500 ns) und mit P4 die Pulslänge (eingestellt: 100 ns) eingestellt werden können. Dieser Triggerpuls wird über den Treiber IC8 an die BNC-Buchse B3 ausgegeben. Die Löschung des integrierten Signals erfolgt also kurz (50 ns) nach dessen Messung, und der Integrator ist dann rechtzeitig (ca. 710 ns nach dem Peak des vorherigen Pulses) wieder messbereit.

Die externe Triggerung wird nun erläutert.

Die Messung von genau 1000 vollständigen Spektren pro Sekunde erfordert das Zuführen eines Triggersignals für die Spektrenrate ("master start", 1 kHz) sowie zusätzlich ein weiteres Triggersignal ("master clock") bestehend aus genau 6*1024 Pulsen, die innerhalb einer Periode von weniger als 1 ms anliegen müssen (sonst überlappen die auszulesenden Pixel bereits mit dem zeitlich nächsten Spektrum). Das Datenblatt zu C4069 erlaubt eine master clock von maximal 6*2 MHz, allerdings wurde erfindungsgemäß eine Frequenz von 6.55 MHz gewählt, um die Zeit zwischen zwei aufeinanderfolgenden Nadelpulsen soweit wie möglich zu vergrößern und das Timing für den Betrieb des Integrators zu vereinfachen. Die beiden für die C4069 benötigten Clockfrequenzen können mittels programmierbaren Pulsgeneratoren erzeugt werden.

Um eine galvanische Potentialtrennung zwischen den Pulsgeneratoren und dem Kamerakopf zu gewährleisten (dies ist nötig zur Vermeidung von "Erdschleifen", die zu Störungen am Messsignal führen könnten), werden die Pulse "master start" und "master clock" zunächst über die BNC-Buchsen B5 bzw B8 und schnelle Optokoppler (IC9, IC 10, jeweils OPTOISO1) geführt. Das "master start" Signal wird ferner an IC7 (74S140) invertiert, beide Signale werden dann über die Buchsen B6 bzw. B7 an die Platine C4069 weitergeleitet. Diese Optokoppler wurden aus Platzgründen auf der Integratorplatine untergebracht.

Nachfolgend wird die Spannungsversorgung näher beschrieben.

Die Integratorplatine benötigt zum Betrieb hochstabilisierte DC-Spannungen +5 V, -% V, +15 V, -15 V und +6 V, die auf einer separaten Platine (innerhalb des Kamerakopfes) erzeugt werden.

Ein mechanisches Gehäuse enthält die Platinen C4069, Integratorplatine und Spannungsversorgungsplatine. Die Platine C4069 ist beweglich montiert und wird bei Montage des Kamerakopfes an das Spektrometer mittels einer einfachen Federmechnik an den Ausgang des fiberoptischen Kopplers am MCP-Detektor angedrückt, um einen guten optischen Kontakt zwischen den beiden Lichtleitern (Eingangsfenster des Zeilenarrays / fiberoptischer Koppler) zu erreichen. Von aussen wird eine Wechselspannung (zweimal 18 Volt) über eine isolierte Steckbuchse in das Gehäuse eingeführt. Ferner gibt es isolierte BNC-Buchsen für die Triggereingänge (master start und master clock), den Triggerausgang und das integrierte Analogsignal.

Maßnahmen zur Abschirmung elektrischer und magnetischer Störungen sind wie folgt vorgesehen.

Beim Betrieb des Kamerakopfes am Plasmaexperiment TEXTOR ist mit dem Auftreten erheblicher elektromagnetischer Störungen, gegen die der Kamarakopf abgeschirmt werden muss. Zur Abschirmung des Kamerakopfes gegen diese Störungen wurden folgende Maßnahmen ergriffen: Metallgehäuse (Aluminium) des Kamerakopfes zur Abschirmung elektromagnetischer Felder. Ein weiteres umgebendes Metallgehäuse (Weicheisen) zur Abschirmung gegen magnetische Felder. Alle BNC-Kabelverbindungen zwischen Kamerakopf und Datenerfassung/Triggerung werden als 30 m langer Kabelstrang in einem gemeinsamen Kupferrohr ausgeführt. Die Signalmasse für den Kamerakopf wird von einer Erdschiene am Datenerfassungs-PC abgeschirmt zum Kamerakopf geführt. Alle anderen Anschlüsse des Kamerakopfes erfolgen erdfrei bzw. isoliert. Mit diesen Maßnahmen wird insgesamt erreicht, dass die Analogsignale des Kamerakopfes mit einem Rauschlevel von weniger als 1 mV gemessen werden können, während-gleichzeitig die Position der Spektren auf dem Zeilenarray (Zuordnung zwischen Pixelnummer und Wellenlänge) stabil bleibt.

Zur Aufzeichnung der Spektren wird kommerzieller Windows-95 PC mit einer Datenerfassungskarte des Typs T112-4 (Fa. Imtec, 71522 Backnang) und Datenerfassungssoftware INSIGHT (Imtec) verwendet. Das System kann die Analogdaten von bis zu 4 Kanälen simultan bei externer Triggerung (hier: ca. 1.08 MHz) kontinuierlich mit 12 bit Auflösung aufzeichnen und im RAM des PC zwischenspeichern. Bei einer Größe des RAM von 256 MB werden an TEXTOR die Daten von 3 angeschlossenen Kameraköpfen kontinuierlich über 10 Sekunden Gesamtmessdauer aufgezeichnet. Die Analogbandbreite der Karte von 500 kHz führt dazu, dass die digitalisierten Messwerte einen zeitlichen Mittelwert über das Analogsignal des Kamerakopfes erfassen, wobei die Mittelungsdauer ungefähr -350 ns beträgt. Diese Zeit entspricht ungefähr der zeitlichen Dauer, während der das integrierte Analogsignal des Kamerakopfes zwischen dem Ende des Nadelpulses und dem Start des Löschpulses einen zeitlich konstanten Wert annimmt. Die verwendete Datenerfassung entspricht dem Stand der Technik und ist daher nicht Gegenstand dieses Patentantrages.

Der Kamerakopf arbeitet insgesamt mit einer kontinuierlichen Spektrenrate von 1000 pro Sekunde bei einer Pixelrate von 1.08 MHz und erreicht im praktischen Betrieb einen Dynamikbereich des einzelnen Pixels (Abstand zwischen Rauschen und Aussteuerungsgrenze) von 10-11 bit. Die oben diskutierte Auslegung der Einzelkomponenten führt dazu, dass die Grenze des Linearitätsbereiches des MCP gerade dann erreicht wird, wenn der IC OPA655 in der Integratorplatine seine Sättigung (ca. 3 Volt) erreicht. Beim Betrieb mit der Datenerfassung (Messbereich 0...5 Volt) entspricht das einem nutzbaren Linearitätsbereich von 2000 counts bei etwa 1 count Rauschen (d.h. 11 bit nutzbare Auflösung des Gesamtsystems).

Bezugszeichenliste

1    Beugungsgitter
2    Eingangsspalt
3    Fokalebene
4    MCP
5    Screen
6    Fiberoptischer Koppler
7    Bildverstärker
8    S 3904 - F
9    C 4069
10   Integratorplatine
11   DC-Versorgung
12   Integratorplatine
13   Erweiterungsplatine
14   Invertierer
15   Pulsformer
16   Leitungstreiber
17   Analogschalter
18   Opto-Koppler

## Patentansprüche

1.  vorrichtung zum Messen der Transportzeit von. Verunreinigungstellchen in einem Plasma im Vakuum-Ultraviolet-Wellenlängenbereich, mit

    - einem Spektrometer,
    - Mitteln zur ortsauflösenden Umwandlung von aus dem Spektrometer austretendem Licht in Ladung,
    - einer Integratorschaltung zur ortsauflösenden Integrierung der Ladung
    und
    - Mitteln zum Darstellen der ortsabhängig Integrierten Ladung,

    **dadurch gekennzeichnet, dass** sie

    - eine Zeiten-Kamera großer Pixelhöhe sowie

    die Integratorschaltung

    - einen Operationsverstärker (IC2) mit Frequenz 400 MHz,
    - einen Schalter (IC3) mit Einschaltzeit 12 ns,
    - einen Widerstand (R3),
    - einen Kondensator (C9),
    - Widerstände (R5, R6) zur Begrenzung des Maximalstroms im Schalter,
    - einen Leistungstreiber (IC4)

    und

    - einen MPC-Detektor mit erweitertem Dynamikbereich

    in Form von diskreten Bauelementen aufweist, wobei der Operationsverstärker, der Widerstand und der Kondensator miteinander verknüpft sind und zum Löschen dem Kondensator der Schalter parallel geschaltet ist und die im Stromkreis zwischen Kondensator (C9) und Schalter (IC3) liegenden Widerstände (R5, R6) eine Zeitkonstante von 21 ns im Integratorkreis bewirken und zusammen mit dem Innenwiderstand des Schalters dafür sorgen, dass die Signallöschung des Kondensators in etwa 50 ns erfolgt und dabei der erlaubte Maximalstrom Im Schalter (IC3) nicht überschritten wird.

2. Vorrichtung nach Anspruch 1, **dadurch gekennzeichnet, dass** die Oberfläche des MCP-Detektors mit CsJ beschichtet ist.

3. Vorrichtung nach Anspruch 1 oder 2, **dadurch gekennzeichnet, dass** sie als weiteres diskretes Bauelement einen Phosphor-Screen zum Konvertieren eines Elektronenpulses in sichtbares Licht mit einer Nachleuchtdauer bzw. Abklingzeit von bis zum 100 $\mu$s, bevorzugt von bis zu 30 $\mu$s aufweist.

4. Vorrichtung nach einem der Ansprüche 1 bis 3, **dadurch gekennzeichnet, dass** zwischen dem Phosphor-Screen und dem Sensor ein fiberoptischer Querschnittswandler eingebaut ist.

5. Vorrichtung nach Anspruch 4, **dadurch gekennzeichnet, dass** sie einen Bildverstärker zwischen dem fiberoptischen Querschnittswandler und dem Sensor enthält.

**Claims**

1. A device for measuring the transport time of contaminating particles in a plasma in the vacuum ultraviolet wave range, comprising

   - a spectrometer
   - means for the location sensing conversion of light emerging from the spectrometer into an electric charge,
   - an integrating circuit for the location sensing integration of the electric charge and
   - means for representing the location dependent integrated electric charge,

   **characterized in that** it comprises

   - a line camera having a high amount of pixels as well as

   the integrating circuit comprises

   - an operation amplifier (IC2) having a frequency of 400 MHz,
   - a switch (IC3) with a switch-on time of 12 ns,
   - a resistance (R3),

   - a capacitor (C9),
   - resistances (R5, R6) for limiting the maximum current in the switch
   - a power driver (IC4)

   and

   - a MCP detector having an enlarged volume range

   in form of discrete elements, wherein the operation amplifier, the resistance and the capacitor are connected to each other and the switch is connected in parallel with the capacitor for clearing and the resistances located in the electric circuit between the capacitor (C9) and the switch (IC3) provoke a time constant of 21 ns in the integrating circuit and ensure, together with the inner resistance of the switch, that the signal clearing of the capacitor is realized in about 50 ns and herein the admitted maximum current in the switch (IC3) is not exceeded.

2. A device according to claim 1, **characterized in that** the surface of the MCP detector is coated with CsJ.

3. A device according to claim 1 or 2, **characterized in that** it comprises a phosphorous screen as further discrete element for converting the electron pulse into visible light having a phosphorescence or a pulse decay time of up to 100 $\mu$s, preferably of up to 30 $\mu$s.

4. A device according to one of the claims 1 through 3, **characterized in that** a fibre optical cross section transformer is inserted between the phosphorous screen and the sensor.

5. A device according to claim 4, **characterized in that** it contains an image intensifier between the fibre optical cross section transformer and the sensor.

**Revendications**

1. Dispositif de mesure du temps de transport des particules d'impureté dans un plasma dans la gamme d'ondes ultraviolet lointain, comprenant :

   - un spectromètre
   - des moyens pour la transformation de résolution d'espace d'une lumière émergent du spectromètre en une charge électrique,
   - un circuit d'intégration pour l'intégration de résolution d'espace de la charge électrique et
   - des moyens de représentation de la charge électrique intégrée en fonction d'espace,

**caractérisé en ce qu'**il comprend

- une caméra de lignes ayant une grande quantité de pixels ainsi que

le circuit d'intégration comprend

- un amplificateur d'opération ayant une fréquence de 400 MHz,
- un commutateur (IC3) ayant un temps de mise en circuit de 12 ns,
- une résistance (R3),
- un condensateur (C9),
- des résistances (R5, R6) pour limiter le courant maximal dans le commutateur,
- un propulseur de puissance (IC4)

et

- un détecteur MPC ayant un régime de volume élargi

sous forme des éléments de construction discrets, l'amplificateur d'opération, la résistance et le condensateur étant reliés les uns aux autres et le commutateur étant placé en parallèle au condensateur pour effacer et les résistances (R5, R6) disposées dans le circuit entre le condensateur (C9) et le commutateur (IC3) provoquant une constante de temps de 21 ns dans le circuit d'intégration et assurant, ensemble avec la résistance intérieure du commutateur, que le signal du condensateur sera effacé dans environ 50 ns et le courant maximal admis dans le commutateur (IC3) ne sera pas excédé.

2. Dispositif selon la revendication 1, **caractérisé en ce que** la surface du détecteur MCP est revêtue de CsJ.

3. Dispositif selon la revendication 1 ou 2, **caractérisé en ce qu'**il comprend un écran en phosphore comme un autre élément de construction discret pour convertir une impulsion électronique en lumière visible ayant une durée de phosphorescence ou un temps de descente d'impulsions de jusqu'à 100 μs, de préférence de jusqu'à 30 μs.

4. Dispositif selon l'une des revendications 1 à 3, **caractérisé en ce qu'**un transformateur de section transversale optique à fibre est inséré entre l'écran en phosphore et le détecteur.

5. Dispositif selon la revendication 4, **caractérisé en ce qu'**il contient un amplificateur d'image entre le transformateur de section transversale optique à fibre et le détecteur.

FIG.1

FIG.2

FIG.3

FIG.4

EP 1 434 976 B1

FIG. 5

B4

B6

B7

B1

B2

12

EP 1 434 976 B1

FIG.6

EP 1 434 976 B1

FIG.7

14

FIG.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- New diagnostics for physics studies on TEXTOR-94. *Review of Scientific Instruments,* vol. 72, 1046-1053

- **FONCK et al.** *Appl. Optics,* 1982, vol. 21, 2115
- **STRATTON et al.** *Reviews of Scientific Instruments,* 1986, vol. 57, 2043